Europäisches Patentamt

European Patent Office

Office européen des brevets

(19)

(11) Veröffentlichungsnummer: **0 273 334 B1**

# (12) EUROPÄISCHE PATENTSCHRIFT

(45) Veröffentlichungstag der Patentschrift: **12.06.91**

(51) Int. Cl.⁵: **C11D 3/39**, C11D 7/18, C01B 15/055, B01J 2/22

(21) Anmeldenummer: **87118908.0**

(22) Anmeldetag: **19.12.87**

(54) **Verfahren zur Herstellung von rieselfähigen, stabilen Persäure-Konzentraten durch kompaktierende Granulation.**

(30) Priorität: **27.12.86 DE 3644564**

(43) Veröffentlichungstag der Anmeldung:
**06.07.88 Patentblatt 88/27**

(45) Bekanntmachung des Hinweises auf die
Patenterteilung:
**12.06.91 Patentblatt 91/24**

(84) Benannte Vertragsstaaten:
**AT BE CH DE ES FR GB GR IT LI NL**

(56) Entgegenhaltungen:
**EP-A- 0 200 163**
**EP-A- 0 212 976**
**DE-A- 2 422 691**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Jacobs, Jochen, Dr.**
**Am Acker 20**
**W-5600 Wuppertal 1(DE)**
Erfinder: **Witthaus, Martin, Dr.**
**Burgmüllerstrasse 7**
**W-4000 Düsseldorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Organische Persäuren und ihre Salze wurden schon wiederholt als Bleichmittel in Waschmitteln eingesetzt. Ihr besonderer Vorteil ist darin zu sehen, daß sie bereits bei vergleichsweise niedrigen Waschtemperaturen wirksam werden.

Der unmittelbare Kontakt der Persäuren mit den Waschmittelbestandteilen, insbesondere den Waschalkalien, führt jedoch während der Lagerung dieser Mittel häufig zu einem starken Wirkungsverlust. Man hat daher vorgeschlagen, die Persäuren an poröse Trägermaterialien zu adsorbieren bzw. in wasserlösliche Trägerstoffe einzubetten oder mit wasserunlöslichen Hüllmaterialien, die bei der Anwendungstemperatur schmelzen, zu umhüllen, um eine schädliche Interaktion mit den Reinigungsmittelbestandteilen zu verhindern. Derartige, meist mehrstufige Arbeitsweisen sind jedoch verhältnismäßig aufwendig, und die Verfahrensprodukte besitzen vielfach eine verringerte Auflösungsgeschwindigkeit in Wasser mit der Folge, daß die Persäure verzögert freigesetzt und der Bleicheffekt ungenügend ist. Darüber hinaus hat sich der Stabilisierungseffekt bei Verwendung wasserlöslicher Granuliermittel in vielen Fällen als unzureichend erwiesen.

So sind aus EP-A-200 163 Granulate bekannt, die 3 - 50 Gew.-% aliphatische Percarbonsäuren, 40 - 95 Gew.-% anorganische Salze und 0,2 - 10 Gew.-% einer organischen, als Granulierhilfsmittel fungierenden Polymerverbindung enthalten. Die Granulate werden durch Aufbaugranulation in Anwesenheit von Wasser hergestellt, das anschließend durch vorsichtige Trocknung wieder entfernt werden muß. Bereits bei diesen Verfahrensschritten können Verluste an aktivem Sauerstoff auftreten. Weitere Verluste ergeben sich bei der Lagerung der Granulate. Diese betragen für die in den Beispielen beschriebenen Produkte in Abwesenheit sonstiger Wasch- und Reinigungsmittelbestandteile nach 8wöchiger Lagerung bei 30 °C und 70 % relativer Luftfeuchtigkeit 8,7 bis 15,9 % des Anfangsgehaltes. Nach Zumischen üblicher körniger Waschmittelbestandteile ist erfahrungsgemäß ein noch höherer Aktivitätsverlust zu erwarten.

In DE-A-24 22 691 sind Granulate bekannt, die 1 bis 40 Gew.-% an organischen Persäuren, 5 bis 45 Gew.-% eines aus Magnesiumsulfat und Alkalimetallsulfaten bestehenden Salzgemisches und 5 bis 45 Gew.-% Hydratwasser enthalten. Die Herstellung der Mittel erfolgt vorzugsweise durch Vermischen eines Persäure-Wasser-Gemisches (Wassergehalt 35 bis 50 Gew.-%) mit den Salzen, Extrudieren zu Nudeln und Sphäronisieren des Extrudates zu kugelförmigen Partikeln. Abschließend muß das überschüssige Wasser wieder durch Trocknen unter schonenden Bedingungen entfernt werden. Die Stabilität dieser Produkte wurde während einer einwöchigen Lagerung in einer offenen Schale bei Raumtemperatur geprüft, wobei teilweise noch eine Nachtrocknung erfolgte. Langzeitversuche unter definierten Bedingungen, insbesondere in Gegenwart anderer Waschmittelbestandteile, liegen nicht vor.

Die vorliegende Erfindung vermeidet diese Nachteile.

Gegenstand der Erfindung ist ein Verfahren zur Herstellung eines rieselfähigen Persäure-Konzentrates, dadurch gekennzeichnet, daß man ein inniges Gemisch, bestehend aus (auf wasserfreie Substanz bezogen):

a) 50 bis 95 Gew.-% mindestens einer organischen Persäure bzw. deren Alkali- oder Erdalkalimetallsalze,

b) 5 bis 50 Gew.-% eines wasserlöslichen bzw. in Wasser dispergierbaren Salzes oder eines in der Hauptsache aus derartigen Salzen unter Zusatz geeigneter Konfektionierungshilfsmittel bestehenden Gemisches, das in 1%iger wäßriger Lösung einen pH-Wert von 5 bis 9,5 aufweist,

unter erhöhtem Druck kompaktiert und dabei den Grenzdruck nicht wesentlich überschreitet, bei dem eine weitere Verdichtung nicht mehr auftritt, worauf man das Kompaktat, dessen quecksilberporosimetrisch gemessene Teilchen-Gesamtporosität unter 10 %, vorzugsweise unterhalb 7 % liegt, auf eine mittlere Korngröße von 0,1 bis 2 mm zerkleinert mit der Maßgabe, daß das Schüttgewicht des Verfahrensproduktes zwischen 700 und 1000 g/l beträgt.

Geeignete Persäuren sind beispielsweise Peroxybenzoesäure, Monoperoxyphthalsäure, Diperoxyphthalsäure, Peroxyisophthalsäure, Diperoxyisophthalsäure, Peroxyterephthalsäure, Diperoxyterephthalsäure, Diperoxyazelainsäure, Diperoxysebacinsäure, Diperoxydecandisäure, Diperoxydodecandisäure sowie deren Gemische. Bevorzugt werden Salze von Persäuren verwendet. Als salzbildende Kationen kommen beispielsweise Li, Na, K, Mg und Ca in Frage. Bevorzugte Salze sind die Na- und Mg-Salze.

Die genannten Persäuren, insbesondere ihre Salze, werden in Mengen von 50 bis 95 Gew.-%, vorzugsweise von 70 bis 90 Gew.-% in das Vorgemisch eingesetzt.

Als wasserlösliche Salze (Komponente b) eignen sich vorzugsweise solche, die in 1%iger wäßriger Lösung einen pH-Wert von 6 bis 9 aufweisen und nicht hygroskopisch sind, insbesondere Sulfate, Chloride, Phosphate und Acetate des Natriums und/oder Kaliums sowie deren Gemische, wie wasserfreies Natriumsulfat, Natriumchlorid, Kaliumsulfat, Kaliumchlorid, Natriumacetat, Mononatrium-bzw. Dinatriumorthophosphat, Monokalium- bzw. Dikaliumorthophosphat, Natriumacetat, Kaliumacetat sowie Gemische derartiger Salze.

Als besonders geeignet hat sich wasserfreies Natriumsulfat erwiesen. Als in Wasser dispergierbares Salz kommt z. B. feinkristalliner, wasserhaltiger Zeolith vom Typ NaA in Frage. Auch Salzgemische, z. B. aus Natriumsulfat und Zeolith, sind geeignet.

Die Salze, die in das Gemisch eingebracht werden, weisen zweckmäßigerweise eine Korngröße von 0,01 bis 2 mm, vorzugsweise von 0,1 bis 0,5 mm auf. Die Persäuren bzw. ihre Salze liegen üblicherweise in feinteiliger bzw. feinkristalliner Form vor und können in dieser Form in die Mischung eingebracht werden, wobei ihre Korngröße zweckmäßigerweise im Bereich von 0,01 bis 2 mm, vorzugsweise von 0,1 bis 1 mm liegt. Für die Herstellung und Homogenisierung des Vorgemisches eignen sich übliche Mischvorrichtungen. Das Mischen kann kontinuierlich oder diskontinuierlich erfolgen.

Weitere feste Zusätze, wie disperse Kieselsäure oder Schichtsilikatpulver, ferner auch übliche Sprengmittel, können das Löseverhalten des Granulats regulieren und weitere Produktmerkmale, z. B. die Abriebfestigkeit, beeinflussen. Sie sind jedoch nicht erforderlich. Auch ein Zusatz bekannter Plastifizierungs-, Quell-oder Bindemittel, z. B. wasserlöslicher Polymerer, wie Cellulose-oder Stärkeether und Polyglykolether, wie er üblicherweise zwecks Erzielung einer ausreichenden Plastifizierbarkeit eines zu kompaktierenden Gemisches bzw. zur Erzielung einer ausreichenden Dispergierbarkeit von Kompaktaten in Wasser benötigt werden, kann entfallen, da die erfindungsgemäßen Gemische die erforderlichen Eigenschaften bereits besitzen.

Zum Kompaktieren eignen sich z. B. Walzenstühle, Pelletiervorrichtungen und vergleichbare Vorrichtungen.

Bei Verwendung von Walzenstühlen wird das zu granulierende Gut unter Preßdruck durch den Spalt eines Paares zweier mit gleicher oder ungleicher Umfanggeschwindigkeit gegensinnig laufender Glatt- oder Profilwalzen geführt und dabei zu einem glatten oder strukturierten plattenförmigen Preßgut verdichtet. Dieses platten-bzw. bandförmige Preßgut, das auch als "Schülpenband" bezeichnet wird, wird anschließend einem Zerkleinerungsverfahren unterworfen und dabei gekörntes Gut der gewünschten Korngröße und Kornverteilung gewonnen. Die Zerkleinerung des platten- bzw. bandförmigen Gutes kann in einer Mühle erfolgen. Zweckmäßigerweise wird das zerkleinerte Material anschließend einem Sichtungsprozeß zugeführt. Zu grobes Material wird abgetrennt und in die Zerkleinerungsvorrichtung rückgeführt, während zu feines Material dem Ansatz des pulverförmigen Mischgutes beigegeben und erneut der Kompaktierung im Walzenspalt zugeführt wird.

Die Verpressung kann auf entsprechend gebauten Walzenpaaren im Unterschied zum Schülpenband auch zu nicht zusammenhängenden Kompaktatkörpern, z. B. Briketts, führen.

Die Walzenverpressung kann generell ohne oder mit einer Vorverdichtung des vorgemischten pulverförmigen Gutes erfolgen. Das Walzenpaar kann dabei in jeder beliebigen Raumrichtung, insbesondere also vertikal oder horizontal zueinander angeordnet sein. Das pulverförmige Gut wird dann entweder durch Schwerkraftfüllung oder mittels einer geeigneten Einrichtung, z. B. mittels einer Stopfschnecke dem Walzenspalt zugeführt.

Der Preßdruck im Walzenspalt und die Verweildauer des Materials in dem Bereich des Preßdruckes sind so hoch einzustellen, daß ein gut ausgebildetes Schülpenband mit hoher Dichte erzeugt wird. Der hohe Verdichtungsgrad ist dabei anzustreben, um die gewünschten Schüttgewichte des letztlich gewonnenen rieselfähigen Gutes einzustellen, die zwischen 700 g/l und 1000 g/l liegen sollen. Auch die Abriebsstabilität der Granulate wird durch den Verdichtungsgrad beeinflußt. Höhere Verdichtungsgrade führen zu besonders abriebsstabilen Granulaten, die vielfach erwünscht sind. Dabei muß allerdings beachtet werden, daß zu hohe Preßdrucke die Verfahrenssicherheit und die Stabilität der Perverbindungen beeinträchtigen, da bei ihrem Einsatz das Material auf den Walzen zu stark erhitzt wird. Dies kann zu einer teilweisen Zersetzung der Persäuren bzw. ihrer Salze führen. Dieser unerwünschte Effekt setzt dann ein, wenn eine Erhöhung des Preßdruckes keine weitere Verdichtung des Materials mehr bewirkt und die jetzt zusätzlich eingetragene Preßkraft vorwiegend eine Erwärmung des Behandlungsgutes verursacht.

Die jeweils anzuwendende optimale Preßkraft ist dabei rezepturabhängig . Üblicherweise wird erfindungsgemäß im Walzenspalt mit einer spezifischen Preßkraft gearbeitet, die einer Masse von etwa 0,2 bis 0,7 (Tonne) pro cm Walzenlänge entspricht, wobei besonders bevorzugt der Bereich von etwa 0,3 bis 0,5 t/cm Walzenlänge sein kann.

Überraschenderweise hat sich gezeigt, daß bei Einsatz ausschließlich wasserlöslicher Salze, insbesondere von Natriumsulfat höhere Preßdrucke, beispielsweise solche von 0,4 bis 0,5 t/cm, die Lösungseigenschaften der Verfahrensprodukte nicht beeinträchtigen, sondern vielfach sogar zu einem leichter löslichen bzw. in Wasser besser verteilbaren Produkt führen als niedrige Preßdrucke von 0,2 bis 0,3 t/cm. Im Falle der Mitverwendung wasserunlöslicher Zusatzstoffe, beispielsweise von Zeolithen, kehren sich die Verhältnisse um, d. h. ein Preßdruck von 0,2 bis 0,3 t/cm führt zu besser löslichen bzw. dispergierbaren Granulaten als ein Preßdruck von 0,4 bis 0,5 t/cm. Es empfiehlt sich daher, den Walzendruck entsprechend

3

diesen Rezepturgegebenheiten einzustellen.

Ein weiteres wichtiges Merkmal der kompaktierend angefertigten Persäuregranulate ist die z. B. quecksilberporosimetrisch gemessene Gesamtporosität. Sie ist ein direktes Maß für den Verdichtungsgrad der Aufmischungen und sollte unter 10 %, vorzugsweise unter 7,5 % liegen.

Neben der Einstellung optimaler Preßdrucke im Walzenspalt ist zur Erreichung der erwünschten Schüttgewichte der granulierten rieselfähigen Reinigungsmittel die Einstellung der Dicke des platten-bzw. bandförmigen Kompaktates von Bedeutung. Ist die gewählte Schülpendicke deutlich kleiner als die gewünschte Kornobergrenze des herzustellenden granulierten Produktes, so werden bei der Zerkleinerung des zunächst anfallenden plattenförmigen Kompaktats plättchenförmige Partikel erhalten, die zu Schüttungen mit hohem Leerraumvolumen und daher vergleichsweise geringem Schüttgewicht führen. Bei höheren Kompaktatdicken werden in der anschließenden Zerkleinerung dagegen Partikel erhalten, deren Abmessungen sich dem an sich gewünschten Verhältnis von 1 : 1 : 1 annähern können. Eine solche Kornform führt zu dichteren Schüttungen, deren Leerraumvolumen maximal etwa 50 % beträgt. Die Schüttdichte der fertiggestellten Granulate liegt zwischen 700 und 1 000 g/l, vorzugsweise zwischen 750 und 950 g/l.

Die Abriebfestigkeit der siebklassierten Granulatteilchen ist sowohl vom Preßdruck als auch von der Schülpendicke abhängig. Bei niedrigeren Preßdrucken sollte die Schülpendicke nicht zu groß gewählt werden, da die mechanische Stabilität bzw. Härte in diesem Fall erfahrungsgemäß abnimmt. Andererseits genügen bei geringem Walzenabstand und geringer Schülpendicke vergleichsweise niedrige Preßdrucke, um zu guten Ergebnissen zu kommen. Zweckmäßigerweise sind Schülpenstärken einzustellen, die etwa das 0,5- bis 5fache, vorzugsweise jedoch das 1- bis 2fache der Kornobergrenze darstellen.

Mit gutem Erfolg können auch Pelletierwalzen verwendet werden, wobei im allgemeinen die vorstehend genannten Arbeitsbedingungen eingehalten werden.

Das im erfindungsgemäßen Verfahren nach der Zerkleinerung anfallende Granulat kann in einer besonderen Ausführungsform der Erfindung auch noch weiter verformt werden. Hier wird das primär anfallende Granulat einem oberflächlichen Abrieb von Ecken und Kanten unterworfen und damit insbesondere auch das Schüttgewicht des gekörnten Gutes nochmals erhöht bzw. das Leerraumvolumen entsprechend verringert. Zum Zwecke einer solchen Nachbehandlung kann beispielsweise das primär anfallende Granulat auf rotierenden Scheiben gerollt werden, die auf ihrer Oberseite eine Riffelung aufweisen. Falls erforderlich wird anschließend ein unerwünschter Feinanteil nochmal abgetrennt und wiederum der Kompaktierung zugeführt.

Die im fertigen rieselfähigen Agglomerat angestrebte Kornobergrenze liegt im Bereich von etwa 1,6 bis 2 mm, während andererseits Feinanteile unterhalb etwa 0,2 mm unerwünscht sind. Die bevorzugten rieselfähigen Agglomerate zeigen dementsprechend ein breites Korngrößenspektrum im Bereich von etwa 0,2 bis 1,6 mm.

Die Anwendung der vorliegenden Erfindung führt demnach zu folgenden überraschenden Effekten:
- Entgegen den Erwartungen wird die Einspülbarkeit der Granulate und die Freisetzung der Persäuren bei geeigneter Auswahl der Komponente (b) durch höhere Preßdrucke und damit durch höhere Feststoffdichten nicht verschlechtert, vielfach sogar begünstigt.
- Durch den Einsatz von schwachsauren bis neutralen bzw. nur wenig alkalischen, kristallinen, wasserlöslichen Salzen als Trägermaterial und durch die kompaktierende Konfektionierung sind Persäurekonzentrate zugänglich, die nach Zumischen zu einem Waschmittel keinen Wirksamkeitsverlust zeigen.
- Die kompaktierende Konfektionierung führt zu einer sehr guten Stabilität des Konzentrates im Waschmittel, die möglicherweise auf der kapillaren Fixierung des Wirkstoffes im Kompaktatkorn beruht. Eine ähnliche, vom Verfahren her aufwendigere Stabilisierung wird sonst nur durch ein technisch aufwendigeres Coating erreicht. Das Kompaktierverfahren führt zu einer gleichmäßigen, feinen Verteilung der Persäure in einem nahezu porenfreien, mechanisch stabilen, inerten Feststoffagglomerat.

## Beispiele
Beispiel 1:

In einem mit rotierenden Mischorganen ausgerüsteten Mischer wurden Magnesium-monoperoxyphthalat und wasserfreiem Natriumsulfat im Gewichtsverhältnis 10 : 1 gemischt und mittels einer Stopfschnecke einem Walzenstuhl mit gegensinnig laufendem Walzenpaar zugeführt. Das Material wurde unter einem Druck von 0,48 t/cm zu einem Schülpenband von 2 mm Dicke verdichtet. Das aus dem Walzenspalt austretende, sprödbrüchige Schülpenband wurde vorgebrochen, in einer Siebmühle (Siebgranulator) vermahlen und über ein Rüttelsieb auf eine Korngröße von 0,2 bis 1,25 mm fraktioniert. Das Gutkorn (Ausbeute ca. 70 %) besaß ein Schüttgewicht von 840 g/l und ein Gesamt-Porenvolumen von 6,5 %. Es zeigte nach 8wöchiger Lagerung in Waschmitteln mit in der Klimazelle (30 °C, 80 % Luftfeuchte) keinen Aktivitätsverlust.

Beispiel 2:

Ein Gemisch von 75 Gew.-% Mg-Monoperoxyphthalat und 25 Gew.-% kristallinem wasserfreien Natriumsulfat wurde, wie vorstehend beschrieben, mit einem Druck von 0,32 t/cm kompaktiert. Nach der Kühlung wurde das Kompaktat vermahlen (1,6-mm-Siebgranulator) und siebklassiert (0,2 bis 1,25 mm) und ergab ca. 70 % Gutkorn mit einem Schüttgewicht von 880 g/l. Das Porenvolumen lag unter 7 %.

Beispiel 3:

Ein Gemisch von 75 Gew.-% Mg-Monoperoxyphthalat bzw. wasserfreiem Natriumsulfat wurde bei einem Walzendruck von 0,48 t/cm kompaktiert. Nach der Mahlung (Hammerkorbmühle mit 4-mm-Einsatz) und Siebung (0,2 bis 1,25 mm) wurde ein Produkt mit guter Abriebfestigkeit und einer Schüttdichte von 910 g/l erhalten.

Beispiel 4:

Beispiel 2 wurde unter Verwendung eines Gemisches aus 75 Mg-Monoperoxyphthalat und 25 Gew.-% feinkristallinem Zeoltih NaA wiederholt. Nach Mahlung (Siebgranulator, 1,6-mm-Einsatz) und Siebung (0,2 bis 1,25 mm) wurden 75 % Gutkorn mit einer Schüttdichte von 820 g/l erhalten.

Zwecks Prüfung der Lagerbeständigkeit wurden die Granulate in unvermischter Form sowie als Aufmischung mit einem bleichmittelfreien Haushaltswaschmittel (5 % Granulat, 95 % Waschmittel) bei 30 °C und 70 % relativer Luftfeuchtigkeit im Klimaschrank gelagert. In den Gemischen gemäß Beispiel 1 bis 3 trat während der 2monatigen Versuchsdauer kein Sauerstoffverlust auf. Im Beispiel 4 lag der Aktivitätsverlust unter 5 %. In nicht kompaktierten Aufmischungen war kein Aktivsauerstoff mehr nachweisbar.

Zwecks Prüfung des Lösungsverhaltens wurden jeweils 5 g Granulat zu 500 ml Wasser von 30 °C, das mittels eines Propellerrührers umgerührt wurde, zudosiert. Nach 1 Minute wurde das Rührwerk abgeschaltet und die Lösung durch eine Glasfritte filtriert. Die ungelösten auf der Filterplatte zurückbleibenden Anteile wurden zurückgewogen. Die Rückstände betragen

| Beispiel | Rückstand (Gew.-%) |
|---|---|
| 1 | 0,21 |
| 2 | 0,32 |
| 3 | 0,20 |
| 4 | 0,35 |

Rückstandswerte unter 2 % gelten als sehr gut und führen in der Praxis nicht zu erkennbaren Ablagerungen auf den gewaschenen Textilien.

**Ansprüche**

1. Verfahren zur Herstellung eines rieselfähigen Persäure-Konzentrates, dadurch gekennzeichnet, daß man ein inniges Gemisch, bestehend aus (auf wasserfreie Substanz bezogen):

   a) 50 bis 95 Gew.-% mindestens einer organischen Persäure bzw. deren Alkali- oder Erdalkalimetallsalze,

   b) 5 bis 50 Gew.-% eines wasserlöslichen bzw. in Wasser dispergierbaren Salzes oder eines in der Hauptsache aus derartigen Salzen unter Zusatz geeigneter Konfektionierungshilfsmittel bestehenden Gemisches, das in 1%iger wäßriger Lösung einen pH-Wert von 5 bis 9,5 aufweist,

   unter erhöhtem Druck kompaktiert und dabei den Grenzdruck nicht wesentlich überschreitet, bei dem eine weitere Verdichtung nicht mehr auftritt, worauf man das Kompaktat, dessen quecksilberporosimetrisch gemessene Teilchen-Gesamtporosität unter 10 %, vorzugsweise unterhalb 7 % liegt, auf eine mittlere Korngröße von 0,1 bis 2 mm zerkleinert mit der Maßgabe, daß das Schüttgewicht des Verfahrensproduktes zwischen 700 g/l und 1000 g/l liegt.

2. Verfahren nach Anspruch 1, dadurch gekennzeichnet, daß man ein Gemisch mit einem Gehalt an 70 bis 90 Gew.-% an Salzen der Persäuren einsetzt.

3. Verfahren nach den Ansprüchen 1 und 2, dadurch gekennzeichnet, daß man als Komponente (b) Natriumsulfat, Zeolith NaA oder deren Gemische einsetzt.

4. Verfahren nach den Ansprüchen 1 bis 3, dadurch gekennzeichnet, daß man die Kompaktierung im Walzenspalt mit einer spezifischen Preßkraft durchführt, der einer Masse von 0,2 bis 0,7 t (Tonne), vorzugsweise 0,3 bis 0,5 t pro cm Walzenlänge entspricht.

5. Verfahren nach den Ansprüchen 1 bis 3, dadurch gekennzeichnet, daß man in Abwesenheit von Plastifizierungsmitteln aus der Klasse der wasserlöslichen Polymeren arbeitet.

6. Verfahren nach den Ansprüchen 1 bis 5, dadurch gekennzeichnet, daß das Schüttgewicht des Verfahrensproduktes 750 g/l bis 950 g/l beträgt.

## Claims

1. A process for the production of a free-flowing peracid concentrate, characterized in that an intimate mixture consisting of (based on anhydrous substance):
   a) from 50 to 95% by weight of at least one organic peracid or alkali or alkaline-earth metal salts thereof,
   b) from 5 to 50% by weight of a water-soluble or water-dispersible salt or of a mixture consisting mainly of such salts with addition of suitable blending aids which has a pH value of 5 to 9.5 in 1% aqueous solution,
   is compacted under elevated pressure without significantly exceeding the pressure limit at which no further compaction occurs, after which the compactate, of which the total particle porosity as measured by mercury porosimetry is below 10% and preferably below 7%, is size-reduced to a mean particle size of from 0.1 to 2 mm, with the proviso that the end product has a powder density of 700 to 1,000 g/l.

2. A process as claimed in claim 1, characterized in that a mixture containing from 70 to 90% by weight of salts of the peracids is used.

3. A process as claimed in claims 1 and 2, characterized in that sodium sulfate, zeolite NaA or mixtures thereof is/are used as component (b).

4. A process as claimed in claims 1 to 3, characterized in that compaction is effected in a roll gap under a specific pressure corresponding to a mass of 0.2 to 0.7 and preferably 0.3 to 0.5 t (metric tons) per cm roll length.

5. A process as claimed in claims 1 to 3, characterized in that it is carried out in the absence of plasticizing agents of the water-soluble polymer type.

6. A process as claimed in claims 1 to 5, characterized in that the end product has a powder density of 750 g/l to 950 g/l.

## Revendications

1. Procédé de fabrication d'un concentré de peracide s'écoulant librement, caractérisé en ce qu'un mélange intime se composant de (calculé en substance anhydre) :

a) 50 à 95 % en poids au moins d'un peracide organique ou de ses sels alcalins ou alcalino-terreux,
b) 5 à 50 % en poids d'un sel soluble dans l'eau ou dispersable dans l'eau ou d'un mélange se composant principalement de sels de ce type avec addition de produit auxiliaire approprié, mélange qui comporte dans une solution aqueuse à 1 % un pH de 5 à 9,5 est compacté à pression élevée et en outre ne dépasse pas essentiellement la pression limite, à partir de laquelle un compactage ultérieur n'est plus possible, après quoi on réduit le produit compacté,, dont la porosité totale de particules mesurée par porosimétrie au mercure se trouve inférieure à 10 %, de préférence en-dessous de 7 %, à une grosseur de grain de 0,1 à 2 mm sous réserve, que la densité apparente du produit du procédé soit située entre 700 gr/l et 1000 gr/l.

2. Procédé selon la revendication 1, caractérisé en ce qu'on utilise un mélange ayant une teneur de 70 à 90 % en poids de sels de peracides.

3. Procédé selon les revendications 1 et 2, caractérisé en ce qu'on utilise comme composant (b) du sulfate de sodium, de la zéolithe NaA ou leurs composés.

4. Procédé selon les revendications 1 à 3, caractérisé en ce qu'on réalise le compactage dans un intervalle de cylindres avec une force de pression spécifique, qui correspond à une masse de 0,2 à 0,7 t (tonne), de préférence de 0,3 à 0,5 t par cm de longueur de cylindre.

5. Procédé selon les revendications 1 à 3, caractérisé en ce qu en l'absence de produits de plastification, on travaille avec la classe des polymères, solubles dans l'eau.

6. Procédé selon les revendications 1 à 5, caractérisé en ce que la densité apparente du produit du procédé atteint 750 gr/l à 950 gr/l.